# EUROPÄISCHE PATENTANMELDUNG

(11) **EP 0 987 654 A2**
(43) Veröffentlichungstag der Anmeldung: **22.03.2000**
(21) Anmeldenummer: 99202946.2
(22) Anmeldetag: 10.09.1999
(51) Int. Cl.: G06T 1/60

(54) **Anordnung zur Verarbeitung digitaler Videodaten**

(30) Priorität: 19.09.1998 DE 19843041
(71) Anmelder: Philips Corporate Intellectual Property GmbH, 52064 Aachen (DE); Koninklijke Philips Electronics N.V., 5621 BA Eindhoven (NL)
(72) Erfinder: Büttner, Lutz, Philips Corporate Intel. Prop. GmbH, 22335 Hamburg (DE); Wessely, Uwe, Philips Corporate Intel. Prop. GmbH, 22335 Hamburg (DE); Scheller, Günter, Dr., 22335 Hamburg (DE)
(74) Vertreter: von Laue, Hanns-Ulrich

(57) **Zusammenfassung**

Eine Anordnung zur Verarbeitung digitaler Videodaten mit wenigstens einem Rechner (1), mittels dessen von externen Geräten gelieferte Videodaten verarbeitbar sind, soll dahingehend ausgestaltet sein, daß die Speicherbandbreite von zur Zwischenspeicherung der Videodaten vorgesehenen Speichern nicht aufgeteilt wird. Dazu ist gemäß einer ersten Asuführungsform der Erfindung vorgesehen, daß die Anordnung wenigstens einen Wechselbankspeicher (31, 32) mit wenigstens zwei Speicherbänken (33, 34; 35, 36) aufweist, wobei auf eine Speicherbank (33, 34; 35, 36) gleichzeitig nur entweder ein Lese- oder ein Schreibzugriff vorgenommen wird,
daß die Anordnung einen internen Datenbus (2) aufweist, über den der Rechner (1) zum Schreiben oder Lesen von Videodaten auf einen Wechselbankspeicher (31, 32) zugreifen kann,
daß externe Geräte über einen externen Datenbus zum Schreiben oder Lesen von Videodaten auf die Wechselbankspeicher (31, 32) zugreifen können
und daß die Ankopplung der beiden Datenbussysteme auf die Speicherbänke (33, 34; 35, 36) in der Weise umschaltbar ist, daß über den internen Datenbus (2) auf eine erste Speicherbank (33; 35) und über den externen Datenbus auf eine zweite Speicherbank (34; 36) Lese- oder Schreibvorgänge erfolgen können oder daß über den internen Datenbus (2) auf die zweite Speicherbank (34; 36) und über den externen Datenbus auf die erste Speicherbank (33; 35) Lese- oder Schreibvorgänge erfolgen können.

## Beschreibung

Die Erfindung betrifft eine Anordnung zur Verarbeitung digitaler Videodaten mit wenigstens einem Rechner, mittels dessen von externen Geräten gelieferte Videodaten verarbeitbar sind.

Bei konventionellen Rechnersystemen, die Videodatenströme verarbeiten sollen, besteht das Problem, daß auf einen Speicherbereich sowohl zum Schreiben der Daten, zum Verarbeiten der Daten wie auch zum Auslesen der Daten zugegriffen werden muß. Infolge dessen wird die Speicherbandbreite wenigstens dreigeteilt. Die in konventionellen Standardrechnern zur Verfügung stehende Speicherbandbreite reicht damit für alle drei Zwecke nicht mehr aus. So hat beispielsweise ein Hauptspeicher eines typischen Standardrechnersystems etwa eine Bandbreite von 60 bis 70 Megabit pro Sekunde. Für das Ein- und Auslesen der Daten werden bereits etwa je 75 Megabit pro Sekunde benötigt, so daß nur noch etwa 10 Megabit pro Sekunde für die Verarbeitung zur Verfügung stehen. Dies kann eventuell für Wipe-Funktionen noch ausreichend sein, für andere Funktionen, beispielsweise für Chromakey-Funktionen oder Ähnliches jedoch nicht mehr.

Es ist Aufgabe der Erfindung, eine Anordnung der eingangs genannten Art anzugeben, bei der das Problem der Aufteilung der Speicherbandbreite zum Lesen, Schreiben und Verarbeiten der Daten nicht mehr auftritt.

Diese Aufgabe ist für eine erste Ausführungsform der Erfindung dadurch gelöst, daß die Anordnung wenigstens einen Wechselbankspeicher mit wenigstens zwei Speicherbänken aufweist, wobei auf eine Speicherbank gleichzeitig nur entweder ein Lese- oder ein Schreibzugriff vorgenommen wird,
daß die Anordnung einen internen Datenbus aufweist, über den der Rechner zum Schreiben oder Lesen von Videodaten auf einen Wechselbankspeicher zugreifen kann,
daß externe Geräte über einen externen Datenbus zum Schreiben oder Lesen von Videodaten auf die Wechselbankspeicher zugreifen können
und daß die Ankopplung der beiden Datenbussysteme auf die Speicherbänke in der Weise umschaltbar ist, daß über den internen Datenbus auf eine erste Speicherbank und über den externen Datenbus auf eine zweite Speicherbank Lese- oder Schreibvorgänge erfolgen können oder daß über den internen Datenbus auf die zweite Speicherbank und über den externen Datenbus auf die erste Speicherbank Lese- oder Schreibvorgänge erfolgen können.

Es ist für das Abspeichern der Videodaten ein spezieller Wechselbankspeicher vorgesehen, welcher wenigstens zwei Speicherbänke aufweist. Dabei ist vorgesehen, daß auf eine Speicherbank zur gleichen Zeit nur entweder ein Lese- oder ein Schreibzugriff durchgeführt wird. Auf diesen Wechselbankspeicher kann ein Rechner, der die Videodaten verarbeiten kann, über einen internen Datenbus zugreifen. Externe Geräte können über einen externen Datenbus ebenfalls zum Schreiben oder Lesen auf die Videodaten in dem Wechselbankspeicher zugreifen.

Damit sowohl der Rechner wie auch externe Geräte auf die Daten zugreifen können, sind die beiden Datenbussysteme wechselweise auf die beiden Speicherbänke umschaltbar. Dies bedeutet also, daß entweder der interne Datenbus beispielsweise auf eine erste Speicherbank und der externe Datenbus auf eine zweite Speicherbank zugreifen kann oder umgekehrt.

Damit ist bereits das bei Anordnungen nach dem Stande der Technik auftretende Problem der Aufteilung der Speicherbandbreite gelöst. Es wird nämlich auf eine Speicherbank gleichzeitig nur entweder über den internen Datenbus von dem Rechner oder über den externen Datenbus durch ein externes Gerät zugegriffen. Damit steht für das jeweilige Gerät die volle Speicherbandbreite zur Verfügung.

Beispielsweise kann der Rechner sich die Daten aus einer ersten Speicherbank zur Verarbeitung holen. In dieser Speicherdatenbank können Daten, beispielsweise ein Halbbild oder ein Vollbild, abgelegt sein. Nach der Verarbeitung und dem Umschalten der Zuordnung der Datenbusse auf die Speicher kann der Rechner die Daten wieder in einem anderen Speicher ablegen. Nach wiederum erfolgter Umschaltung können die Daten aus diesem Speicher nach vollständiger Abspeicherung beispielsweise eines Halbbildes oder Vollbildes wieder nach außen über den externen Datenbus gegeben werden. Dabei entfällt auch die Notwendigkeit einer Zwischenspeicherung der Daten in dem Arbeitsspeicher des Rechners.

Die oben angegebene Aufgabenstellung ist ferner durch eine zweite Ausführungsform gelöst, die dadurch gekennzeichnet ist, daß die Anordnung wenigstens einen Ringpufferspeicher mit wenigstens drei Pufferspeichern aufweist, wobei auf einen Pufferspeicher gleichzeitig nur entweder ein Lese- oder ein Schreibzugriff vorgenommen wird,
daß die Anordnung einen internen Datenbus aufweist, über den der Rechner zum Schreiben oder Lesen von Videodaten auf einen Ringpufferspeicher zugreifen kann,
daß externe Geräte über einen externen Datenbus zum Schreiben oder Lesen von Videodaten auf den Ringpufferspeicher zugreifen können
und daß die Ankopplung der beiden Bussysteme auf die Pufferspeicher in der Weise erfolgt, daß sowohl der interne Datenbus wie auch der externe Datenbus alternativ zum Lesen oder Schreiben von Videodaten auf die Pufferspeicher zugreifen können.

Die Anordnung zur Verarbeitung digitaler Videodaten gemäß dieser zweiten Ausführungsform ist grundsätzlich ähnlich wie diejenige gemäß der ersten Ausführungsform aufgebaut, jedoch ist der Wechselbankspeicher durch wenigstens einen Ringpufferspeicher ersetzt. In dem Ringpufferspeicher sind wenigstens drei Pufferspeicher vorgesehen. Durch diese größere Anzahl der Pufferspeicher und dadurch, daß die beiden Bussysteme nicht mehr zu festen Zyklen umgeschaltet werden, sondern alternativ zum Lesen oder Schreiben auf die Pufferspeicher zugreifen können, ohne daß hierzu feste Umschaltzeiten vorgegeben sind, wird die Flexibilität der Anordnung weiter erhöht. So muß beispielsweise durch den Rechner nicht mehr eine synchrone Verarbeitung der in einem Speicher abgelegten Daten erfolgen, da es keine feste Umschaltzeitpunkte zwischen den Pufferspeichern gibt. Dadurch kann die CPU die Daten in der Geschwindigkeit verarbeiten, die je nach Aufwand des Rechenprozesses erforderlich ist. Auch stehen für die CPU durch die nun mögliche asynchrone Verarbeitung der Daten nun zusätzliche Rechenzeiten zur Verfügung, die beispielsweise für Netzwerkprotokolle, für Zwecke des Betriebssystems oder Ähnliches verbleiben. Darüber hinaus treten in der zweiten Ausführungsform ebenfalls die bei der ersten Ausführungsform beschriebenen Vorteile ein.

Nach weiteren Ausgestaltungen der Erfindung ist für beide Ausführungsformen vorgesehen, daß der oder die Wechselbankspeicher bzw. der oder die Ringpufferspeicher bidirektionale Eingabe- und Ausgabe-Ports aufweisen, so daß für einen Datenaustausch mit externen Geräten und mit dem Rechner ein Umschalten der Ein- bzw. Ausgänge nicht erforderlich ist.

Ebenfalls beiden Ausführungsformen gemeinsam ist eine weitere Ausgestaltung der Erfindung, die vorsieht, daß die Adressen der Speicherbänke bzw. Pufferspeicher in den Adreßbereich des Rechners eingeblendet sind. Damit wird erreicht, daß der Rechner unmittelbar auf diese Bereiche zugreifen kann und ein Kopieren von Daten in den Arbeitsspeicherbereich des Rechners nicht erforderlich ist.

Die Erkennung von Daten kann nach einer für beide Ausführungsformen vorgesehenen weiteren Ausgestaltung der Erfindung anhand von Vertikal-Synchronisationsimpulsen erfolgen, die in den Videodaten enthalten sind. Anhand dieser Impulse kann beispielsweise ein Anfang und ein Ende eines Halb- oder Vollbildes identifiziert werden.

Der oder die Wechselbankspeicher bzw. der oder die Ringpufferspeicher können vorteilhaft, wie nach weiteren Ausgestaltungen der Erfindung vorgesehen ist, auf einem Rechnerboard vorgesehen sein. Dieses Rechnerboard kann beispielsweise in einen Standardrechner als Steckkarte eingesteckt werden und über den in dem Rechner vorgesehenen PCI-Bus mit dem Rechner kommunizieren. Es ergibt sich dadurch ein äußerst einfacher Aufbau, der darüber hinaus für Standardrechner geeignet ist.

Weitere, für beide Ausführungsformen der Erfindung vorgesehene Ausgestaltungen sehen vor, daß der externe Zugriff auf die Wechselbankspeicher bzw. Ringpufferspeicher über ein Netzwerk erfolgt. Über dieses Netzwerk und über einen Datenbus kann dann wenigstens ein weiterer Rechner auf die Daten zugreifen und eine Vor- oder Nachverarbeitung der Videodaten vornehmen. Es sind auf diese Weise wenigstens zwei Rechnersysteme miteinander verknüpft, die auf die in den Wechselbankspeichern bzw. Ringpufferspeichern abgelegten Daten zugreifen können und diese bearbeiten können.

Nachfolgend werden drei Ausführungsbeispiele der Erfindung anhand der Zeichnung näher erläutert. Es zeigen:
Fig. 1 eine Anordnung zum Bearbeiten von digitalen Videodaten gemäß der zweiten Ausführungsform der Erfindung,
Fig. 2 die Anordnung gemäß Fig. 1 mit zusätzlich angekoppeltem externen Netzwerk und
Fig. 3 eine Anordnung zur Verarbeitung von digitalen Videodaten nach der ersten Ausführungsform der Erfindung.

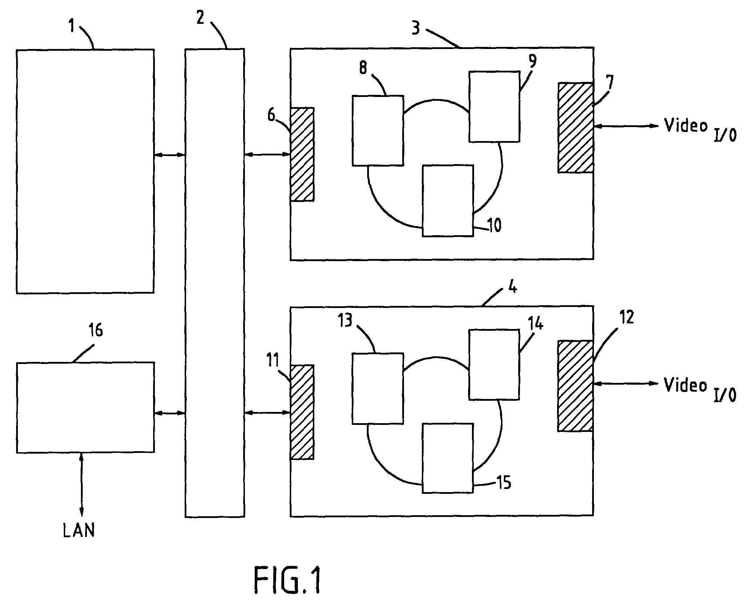

Eine in Fig. 1 in Form eines Blockschaltbildes dargestellte Anordnung zur Verarbeitung von digitalen Videodaten gemäß der zweiten Ausführungsform der Erfindung weist einen Rechner 1 auf, der über einen internen Datenbus 2, bei dem es sich vorzugsweise um einen PCI-Bus handelt, auf Ringpufferspeicher 3 und 4 zugreifen kann.

Dabei geschieht der Zugriff auf den Ringpufferspeicher 3 mittels eines bidirektionalen Ein- und Ausgabe-Ports 6.

Ein externes Gerät kann über einen im übrigen in der Figur nicht angedeuteten externen Datenbus über einen weiteren bidirektionalen Ein- und Ausgabe-Port 7 zugreifen.

Innerhalb des ersten Ringpufferspeichers 3 sind drei Pufferspeicher 8, 9 und 10 vorgesehen, auf die alternativ über den internen Datenbus 2 oder über den externen Datenbus über die Ein- und Ausgabe-Ports 6 bzw. 7 zugegriffen werden kann. Der Zugriff auf einzelne Pufferspeicher 8, 9 oder 10 ist dabei zeitlich nur so möglich, daß zur gleichen Zeit nur entweder über den internen oder über den externen Datenbus zugegriffen wird. Es gibt jedoch keine festen Zeitschlitze, zu denen ein Zugriff jeweils möglich ist.

Der zweite vorgesehene Ringpufferspeicher 4 ist gleichartig aufgebaut wie der Ringpufferspeicher 3 und weist Ein- und Ausgabe-Ports 11 und 12 sowie Pufferspeicher 13, 14 und 15 auf.

In der Figur ist ferner eine Nerzwerkschnittstelle 16 angedeutet, über die ein Netzwerk, in der Figur mit LAN (Local Arial Network) und damit auch auf die Ringpufferspeicher 3 und 4 zugreifen kann oder über die der Rechner mir dem Netzwerk kommunizieren kann.

In dem Ausführungsbeispiel gemäß Fig. 1 sind zwei Ringpufferspeicher vorgesehen; für eine minimale Ausführung würde jedoch auch ein Ringpufferspeicher genügen. Ferner müßten die Ein- und Ausgabe-Ports 6, 7, 11 und 12 nicht notwendigerweise bidirektional ausgeführt sein; es könnten auch eindirektionale Ports vorgesehen sein, dann müßte jedoch für jede Datenbusverbindung ein Ein- und ein Ausgabe-Port getrennt vorgesehen sein.

Für einen Verarbeitungsvorgang von digitalen Videodaten könnten beispielsweise die Daten über den externen Datenbus und den Ein- und Ausgabe-Port 7 des ersten Ringpufferspeichers 3 in den Pufferspeicher 8 eingelesen werden. Es könnte sich dabei beispielsweise um Daten eines Halbbildes handeln. Während dieser Zeit während des Einlesens dieser Daten in den Pufferspeicher 8 kann weder der Rechner 1 über den internen Datenbus 2 auf den Pufferspeicher 8 zugreifen noch könnten durch den Ein-/Ausgabe-Port Daten aus dem Pufferspeicher 8 ausgelesen werden.

Sobald die von dem externen Datenbus stammenden Videodaten in dem Pufferspeicher 8 abgelegt sind, kann beispielsweise der Rechner 1 über den internen Datenbus 2 und den Ein-/Ausgabe-Port 6 auf diesen Pufferspeicher 8 zum Lesen der Daten zugreifen und diese verarbeiten. Die verarbeiteten Daten können beispielsweise in dem Pufferspeicher 10 abgelegt werden. Sobald diese Verarbeitung der Daten durch den Rechner 1 abgeschlossen ist, kann über den Ein-/Ausgabe-Port 7 wieder über den externen Datenbus auf diese Daten zugegriffen werden und sie können ausgelesen werden.

Bei all diesen Schreib- und Lesevorgängen gilt, daß auf den jeweils gleichen Pufferspeicher durch andere Einheiten nicht zugegriffen werden kann. Auf die übrigen Pufferspeicher kann jedoch durch die jeweils andere Einheit also entweder über den externen Datenbus oder über den internen Datenbus zugegriffen werden. Es ist somit also ein gleichzeitiges Schreiben und Lesen von Videodaten möglich, jedoch nicht in dem gleichen Pufferspeicher 8, 9 oder 10.

Durch diese Anordnung wird einerseits der Vorteil erreicht, daß eine Aufteilung der Speicherbandbreite der Speicher nicht eintritt, da bezüglich jedes Speichers nur entweder ein Schreiben oder Lesen stattfindet, so daß für diesen Vorgang die volle Speicherbandbreite zur Verfügung steht.

Die Ringpufferspeicher haben darüber hinaus den Vorteil, daß ein asynchrones Lesen oder Schreiben von Daten möglich ist. Es kann zwar auf einen Pufferspeicher zur gleichen Zeit nur alternativ entweder über den internen oder den externen Datenbus zugegriffen werden, dies ist jedoch die einzige Einschränkung. Im übrigen gibt es keine zeitlichen Einschränkungen. Dadurch ist beispielsweise eine asynchrone Verarbeitung der Videodaten durch den Rechner möglich. Ferner stehen dem Rechner damit freie Zeiten zur Verfügung, die er für Betriebssystemzwecke oder für Nerzwerkzwecke nutzen kann.

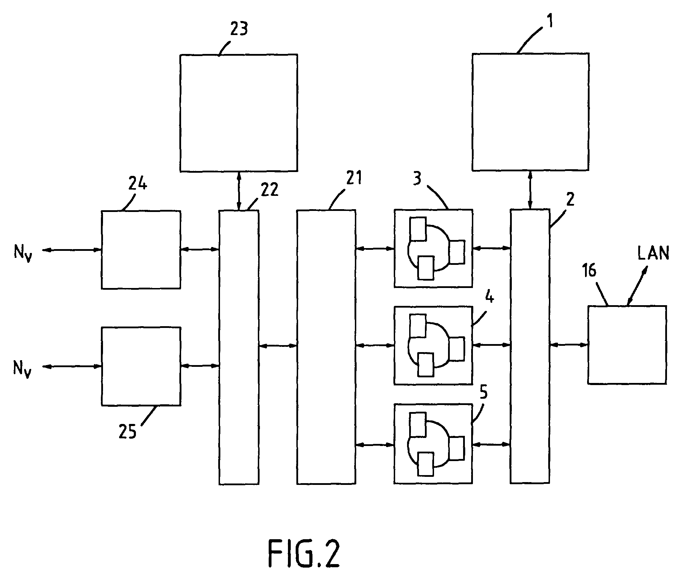

In Fig. 2 ist die Anordnung gemäß Fig. 1 dargestellt, erweitert mit einer Anbindung an wenigstens ein weiteres Rechnersystem über eine Netzwerkverbindung.

Ferner ist in dem Ausführungsbeispiel gemäß Fig. 2 in der erfindungsgemäßen Anordnung zur Verarbeitung von Videodaten ein weiterer Ringpufferspeicher 5 vorgesehen, der in gleicher Weise aufgebaut ist, wie die Ringpufferspeicher 3 und 4 der Anordnung gemäß Fig. 1.

In dem Ausführungsbeispiel gemäß Fig. 2 ist ein externer Datenbus 21 in Form eines Netzwerkes vorgesehen. Dieses Netzwerk 21 kann auf die externen Ein-/Ausgabe-Ports der Ringpufferspeicher 3, 4 und 5 zugreifen.

Das Netzwerk 21 ist außerdem mit einem zweiten internen Datenbus 22 gekoppelt, bei dem es sich ebenfalls um einen PCI-Bus handeln kann, und auf den ein zweiter Rechner 23 zugreifen kann. Es können über weitere Netzwerkschnittstellen 24 und 25 weitere Nerzwerkverbindungen hergestellt werden.

In dem Ausführungsbeispiel gemäß Fig. 2 werden also über die nach außen gerichteten Ein- und Ausgabe-Ports der Ringpufferspeicher 3, 4 und 5 nicht nur von einer Quelle stammende Daten eingelesen bzw. an eine Senke Videodaten ausgegeben, sondern es können durch den zweiten Rechner 23 die Daten in den Ringpufferspeichern 3, 4 und 5 zusätzlich vor- oder nachverabeitet werden.

Durch die oben beschriebenen Vorteile des Zugriffs auf die Daten in den Ringpufferspeichern 3, 4 und 5 kann auch diese Verarbeitung, die vor oder nach der Verarbeitung durch den ersten Rechner 1 stattfindet, asynchron erfolgen. In dieser Konstellation verstärken sich dadurch die oben beschriebenen Vorteile der erfindungsgemäßen Anordnung.

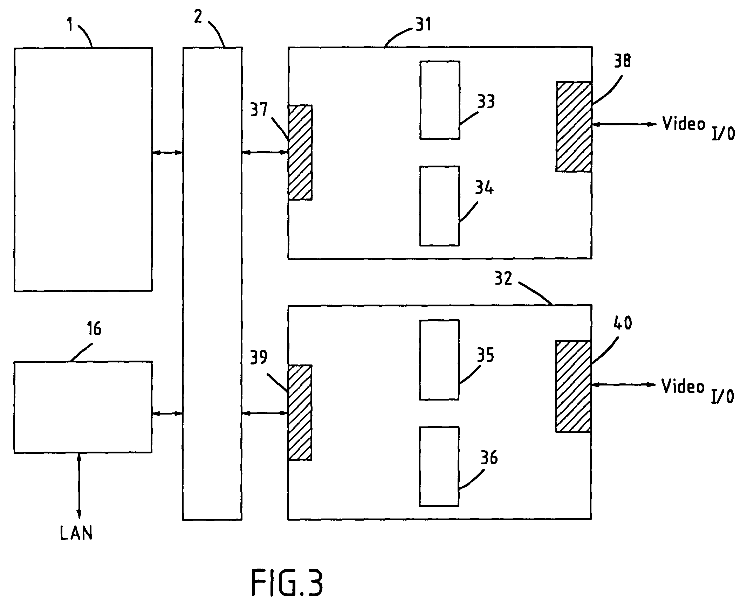

In Fig. 3 ist in Form eines Blockschaltbildes die erste Ausführungsform der erfindungsgemäßen Anordnung zum Verarbeiten von Videodaten vorgesehen, welche wie die zweite Ausführungsform gemäß Fig. 1 einen Rechner 1, einen internen Datenbus 2 und eine Netzwerkschnittstelle 16 aufweist.

Anstelle der Ringpufferspeicher sind in der ersten Ausführungsform gemäß Fig. 3 jedoch Wechselbankspeicher 31 und 32 vorgesehen, welche jeweils zwei Speicherbänke 33 und 34 bzw. 35 und 36 aufweisen.

Der erste Wechselbankspeicher 31 weist einen zu dem internen Datenbus 2 gerichteten Ein- und Ausgabe-Port 37 und einen nach außen gerichteten Ein- und Ausgabe-Port 38 auf.

In entsprechender Weise weist der zweite Wechselbankspeicher 32 Ein- und Ausgabe-Ports 39 und 40 auf.

Entsprechend der zweiten Ausführungsform der Erfindung können über die Ein- und Ausgabe-Ports 37 bis 40 Daten ein- und ausgelesen werden.

Die Wechselbankspeicher 31 weisen jedoch im Gegensatz zu den Ringpufferspeichern der Anordnung gemäß Fig. 1 nur jeweils zwei Speicherbänke 33 und 34 bzw. 35 und 36 auf.

Auch bei den Wechselbankspeichern 31 und 32 ist vorgesehen, daß auf eine Speicherbank 33, 34, 35 bzw. 36 zur Zeit nur entweder über den internen oder über den externen Datenbus zugegriffen werden kann. Es ist also gleichzeitig nur ein Lesen oder Schreiben möglich.

Um dennoch auf beispielsweise die beiden Speicherbänke 33 und 34 des Wechselbankspeichers 31 wechselweise über die beiden Datenbusse zugreifen zu können, werden diese umgeschaltet. Dies wird in in der Fig. 3 nicht näher dargestellter Weise so vorgenommen, daß während einer ersten Zeitphase über den internen Datenbus und den Ein-/Ausgabe-Port 37 auf die Speicherbank 33 zum Lesen oder Schreiben zugegriffen werden kann. Während dieser Phase kann über den externen Datenbus und den Ein- und Ausgabe-Port 38 auf die Speicherbank 34 zugegriffen werden. Während einer zweiten Phase werden die Bussysteme umgeschaltet, so daß dann über den internen Datenbus auf die Speicherbank 34 und über den externen Datenbus auf die Speicherbank 33 zugegriffen werden kann.

Dieses Umschalten kann beispielsweise synchronisiert mit Halbbildern geschehen, wobei die Identifizierung der Halbbilder anhand von in den Videodaten enthaltenen Vertikal-Synchronimpulsen vorgenommen werden kann.

Auch bei dieser Ausführungsform der Erfindung tritt keine Aufteilung der Speicherbandbreite auf, da auf eine Speicherbank 33 bis 36 jeweils gleichzeitig nur durch einen Datenbus zugegriffen kann. Im Unterschied zur zweiten Ausführungsform der Erfindung ist jedoch hier der Speicher 1 an diejenigen Verarbeitungszeiten gebunden, die ihm durch den Umschaltrhythmus zwischen den Speicherbänken vorgegeben sind, da der Rechner 1 nur während fest vorgegebener Zeiten beispielsweise auf eine Speicherbank 33 oder 34 des Wechselbankspeichers 31 zugreifen kann.

Auch für diese zweite Ausführungsform gilt, daß es grundsätzlich ausreichen würde, einen Wechselbankspeicher 31 vorzusehen. Ferner könnten auch hier die Ein- und Ausgabe-Ports eindirektional vorgesehen sein.

## Patentansprüche

1. Anordnung zur Verarbeitung digitaler Videodaten mit wenigstens einem Rechner (1), mittels dessen von externen Geräten gelieferte Videodaten verarbeitbar sind,
dadurch gekennzeichnet,
daß die Anordnung wenigstens einen Wechselbankspeicher (31, 32) mit wenigstens zwei Speicherbänken (33, 34; 35, 36) aufweist, wobei auf eine Speicherbank (33, 34; 35, 36) gleichzeitig nur entweder ein Lese- oder ein Schreibzugriff vorgenommen wird,
daß die Anordnung einen internen Datenbus (2) aufweist, über den der Rechner (1) zum Schreiben oder Lesen von Videodaten auf einen Wechselbankspeicher (31, 32) zugreifen kann,
daß externe Geräte über einen externen Datenbus zum Schreiben oder Lesen von Videodaten auf die Wechselbankspeicher (31, 32) zugreifen können
und daß die Ankopplung der beiden Datenbussysteme auf die Speicherbänke (33, 34; 35, 36) in der Weise umschaltbar ist, daß über den internen Datenbus (2) auf eine erste Speicherbank (33; 35) und über den externen Datenbus auf eine zweite Speicherbank (34; 36) Lese- oder Schreibvorgänge erfolgen können oder daß über den internen Datenbus (2) auf die zweite Speicherbank (34; 36) und über den externen Datenbus auf die erste Speicherbank (33; 35) Lese- oder Schreibvorgänge erfolgen können.

2. Anordnung zur Verarbeitung digitaler Videodaten mit wenigstens einem Rechner (1), mittels dessen von externen Geräten gelieferte Videodaten verarbeitbar sind,
dadurch gekennzeichnet,
daß die Anordnung wenigstens einen Ringpufferspeicher (3, 4) mit wenigstens drei Pufferspeichern (8, 9, 10; 13, 14, 15) aufweist, wobei auf einen Pufferspeicher (8, 9, 10; 13, 14, 15) gleichzeitig nur entweder ein Lese- oder ein Schreibzugriff vorgenommen wird,
daß die Anordnung einen internen Datenbus (2) aufweist, über den der Rechner (1) zum Schreiben oder Lesen von Videodaten auf einen Ringpufferspeicher (3, 4) zugreifen kann,
daß externe Geräte über einen externen Datenbus zum Schreiben oder Lesen von Videodaten auf den Ringpufferspeicher (3, 4) zugreifen können
und daß die Ankopplung der beiden Bussysteme auf die Pufferspeicher (8, 9, 10; 13, 14, 15) in der Weise erfolgt, daß sowohl der interne Datenbus (2) wie auch der externe Datenbus alternativ zum Lesen oder Schreiben von Videodaten auf die Pufferspeicher (8, 9, 10; 13, 14, 15) zugreifen können.

3. Anordnung nach Anspruch 1, dadurch gekennzeichnet,
daß die Wechselbankspeicher (31, 32) bidirektionale Eingabe- und Ausgabe-Ports (6, 11; 7, 12) aufweisen.

4. Anordnung nach Anspruch 1, dadurch gekennzeichnet,
daß die Adressen der Speicherbänke (33, 34; 35, 36) in den Adreßbereich des Rechners (1) eingeblendet sind, so daß dieser Videodaten unmittelbar aus den Speicherbänken (33, 34; 35, 36) lesen oder in diesen speichern kann.

5. Anordnung nach Anspruch 1, dadurch gekennzeichnet,
daß innerhalb der in den Speicherbänken (33, 34; 35, 36) abgelegten Videodaten eine Erkennung von Anfang bzw. Ende zusammengehöriger Daten anhand von in den Videodaten enthaltenen Vertikal-Synchronisationsimpulsen erfolgt.

6. Anordnung nach Anspruch 1, dadurch gekennzeichnet,
daß der externe Zugriff auf die Wechselbankspeicher (31, 32) über ein Netzwerk erfolgt, das wenigstens einen Rechner (23) aufweist, der über einen Datenbus (22) auf das Netzwerk (21) zugreifen kann und mittels dessen eine Vor- oder Nachverarbeitung der Videodaten vornehmbar ist.

7. Anordnung nach Anspruch 1, dadurch gekennzeichnet,
daß der Wechselbankspeicher (31, 32) auf einem Rechnerboard vorgesehen ist, welches über den internen Bus (2), bei dem es sich vorzugsweise um einen PCI-Bus handelt, mit dem Rechner (1) gekoppelt ist.

8. Anordnung nach Anspruch 2, dadurch gekennzeichnet,
daß die Ringpufferspeicher (3, 4) bidirektionale Eingabe- und Ausgabe-Ports (6, 11; 7, 12) aufweisen.

9. Anordnung nach Anspruch 2, dadurch gekennzeichnet,
daß die Adressen der Pufferspeicher (8, 9, 10; 13, 14, 15) in den Adreßbereich des Rechners (1) eingeblendet sind, so daß dieser Videodaten unmittelbar aus den Pufferspeichern (8, 9, 10; 13, 14, 15) lesen oder in diesen speichern kann.

10. Anordnung nach Anspruch 2, dadurch gekennzeichnet,
daß innerhalb der in den Pufferspeichern (8, 9, 10; 13, 14, 15) abgelegten Videodaten eine Erkennung von Anfang bzw. Ende zusammengehöriger Daten anhand von in den Videodaten enthaltenen Vertikal-Synchronisarionsimpulsen erfolgt.

11. Anordnung nach Anspruch 2, dadurch gekennzeichnet,
daß der externe Zugriff auf die Ringpufferspeicher (3, 4) über ein Netzwerk (21) erfolgt, das wenigstens einen Rechner (23) aufweist, der über einen Datenbus (22) auf das Netzwerk (21) zugreifen kann und mittels dessen eine Vor- oder Nachverarbeitung der Videodaten vornehmbar ist.

12. Anordnung nach Anspruch 2, dadurch gekennzeichnet,
daß der Ringpufferspeicher (3, 4) auf einem Rechnerboard vorgesehen ist, welches über den internen Bus (2), bei dem es sich vorzugsweise um einen PCI-Bus handelt, mit dem Rechner (1) gekoppelt ist.
